# EUROPÄISCHE PATENTANMELDUNG

(11) **EP 2 361 709 A2**
(43) Veröffentlichungstag der Anmeldung: **31.08.2011**
(21) Anmeldenummer: 11151867.6
(22) Anmeldetag: 24.01.2011
(51) Int. Cl.: B23D 47/04, B27B 31/00

(54) **Platteneinzugsvorrichtung**

(30) Priorität: 22.02.2010 DE 202010002623 U
(71) Anmelder: Hundegger, Hans, 87749 Hawangen (DE)
(72) Erfinder: Hundegger, Hans, 87749 Hawangen (DE)
(74) Vertreter: Charrier, Rapp & Liebau

(57) **Zusammenfassung**

Die Erfindung betrifft eine Platteneinzugsvorrichtung (1), die mindestens eine an einem verschiebbaren Träger (7) angeordnete Entnahmeeinrichtung (12) für die Entnahme eines plattenförmigen Werkstücks (2) von einem Plattenstapel (4) und die Verschiebung des plattenförmigen Werkstücks (2) auf einen Maschinentisch (5) enthält. Die Entnahmeeinrichtung (12) enthält erfindungsgemäß ein gegenüber dem Träger (7) vertikal bewegbares Anlageelement (14) mit einem Auflageteil (15) zur Auflage auf einer Oberseite des Werkstücks (2) und einem Anschlagteil (16) zur Anlage an einer Seitenfläche des Werkstücks (2).

## Beschreibung

Die Erfindung betrifft eine Platteneinzugsvorrichtung, die mindestens eine an einem verschiebbaren Träger angeordnete Entnahmeeinrichtung für die Entnahme eines plattenförmigen Werkstücks von einem Plattenstapel und die Verschiebung des plattenförmigen Werkstücks auf einen Maschinentisch einer Bearbeitungsanlage enthält.

Derartige Platteneinzugsvorrichtungen werden an Holzbearbeitungsmaschinen für die automatische Entnahme der Platten von einem Stapel und deren Transport zu einer Bearbeitungsstation eingesetzt. Vielfach werden hierfür Sauggreifer verwendet, die ein plattenförmiges Werkstück mit Hilfe von Unterdruck anziehen, um dieses an die gewünschte Arbeitsposition transportieren zu können. Allerdings kann das Ansaugen besonders bei schweren Platten oder Platten mit unregelmäßiger Oberfläche problematisch sein. Außerdem sind derartige Sauggreifer in der Regel relativ komplex aufgebaut und auch die Druckluftversorgung und Steuerung der Sauggreifer ist aufwändig.

Aufgabe der Erfindung ist es, einen Platteneinzugsvorrichtung der eingangs genannten Art zu schaffen, die auf einfache und kostengünstige Weise den Einzug von plattenförmigen Werkstücken in Bearbeitungsstationen von Plattenbearbeitungsmaschinen oder dgl. ermöglicht.

Diese Aufgabe wird durch eine Platteneinzugsvorrichtung mit den Merkmalen des Anspruchs 1 gelöst. Zweckmäßige Weiterbildungen und vorteilhafte Ausführungsformen der Erfindung sind Gegenstand der Unteransprüche.

Die erfindungsgemäße Platteneinzugsvorrichtung enthält für die Entnahme eines plattenförmigen Werkstücks von einem Plattenstapel und die Verschiebung des plattenförmigen Werkstücks auf einen Maschinentisch mindestens eine Entnahmeeinrichtung, die an einem verschiebbaren Träger angeordnet ist und ein gegenüber dem Träger vertikal bewegbares Anlageelement mit einem Auflageteil zur Auflage auf einer Oberseite des Werkstücks und ein Anschlagteil zur Anlage an einer Seitenfläche des Werkstücks aufweist. Ein wesentlicher Vorteil der erfindungsgemäßen Platteneinzugsvorrichtung besteht darin, dass ein automatischer Platteneinzug selbst bei Niveauunterschieden von einigen Zentimetern ohne großen Steuerungsaufwand gewährleistet werden kann. Auch plattenförmige Werkstücke mit ungleichmäßiger Oberfläche oder unterschiedlichen Dicken können so ohne weiteres von einem Plattenstapel automatisch entnommen und auf einen Maschinentisch einer Bearbeitungsmaschine verschoben werden.

In einer besonders zweckmäßigen Ausführungsform der Erfindung ist das Auflageelement in der Höhe verstellbar an dem Anschlagteil angeordnet. Dadurch kann das Auflageelement an die Stärke der plattenförmigen Werkstücke angepasst werden.

Das Anlageelement kann in einer einfachen und vorteilhaften Ausführung an einem vertikal verstellbaren Transportarm angeordnet sein, der zwischen einer vorderen Platte einer Halterung und einem von der der Platte beabstandeten Führungsstab über Gleitführungen verschiebbar geführt ist.

Weitere Besonderheiten und Vorzüge der Erfindung ergeben sich aus der folgenden Beschreibung eines bevorzugten Ausführungsbeispiels anhand der Zeichnung. Es zeigen:
- **Figuren 1 bis 3**: eine schematische Darstellung einer Platteneinzugsvorrichtung in unterschiedlichen Stellungen;
- **Figur 4**: einen Träger mit zwei Entnahmeeinrichtungen in einer Perspektive;
- **Figur 5**: eine Seitenansicht des Trägers mit einer Entnahmeeinrichtung und
- **Figur 6**: eine Entnahmeeinrichtung in einer Perspektive.

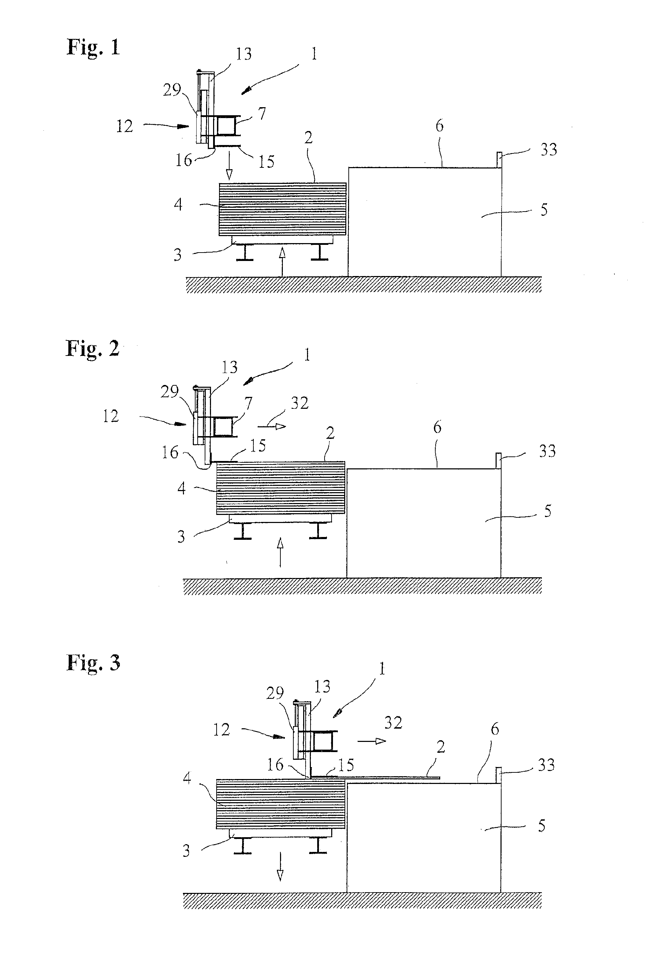

In den Figuren 1 bis 3 ist eine Platteneinzugsvorrichtung 1 für die automatisierte Entnahme eines plattenförmigen Werkstücks 2 von einem auf einem Hubtisch 3 angeordneten Plattenstapel 4 und für den Transport des Werkstücks 2 zu einem Maschinentisch 5 einer Bearbeitungsanlage in unterschiedlichen Stellungen schematisch dargestellt. Die Platteneinzugsvorrichtung 1 ist über dem Plattenstapel 3 und dem Maschinentisch 5 verfahrbar und derart ausgebildet, dass sie von dem Plattenstapel 3 das obere plattenförmige Werkstück 2 abziehen und dieses auf eine Auflagefläche 6 des Maschinentisches 5 schieben kann.

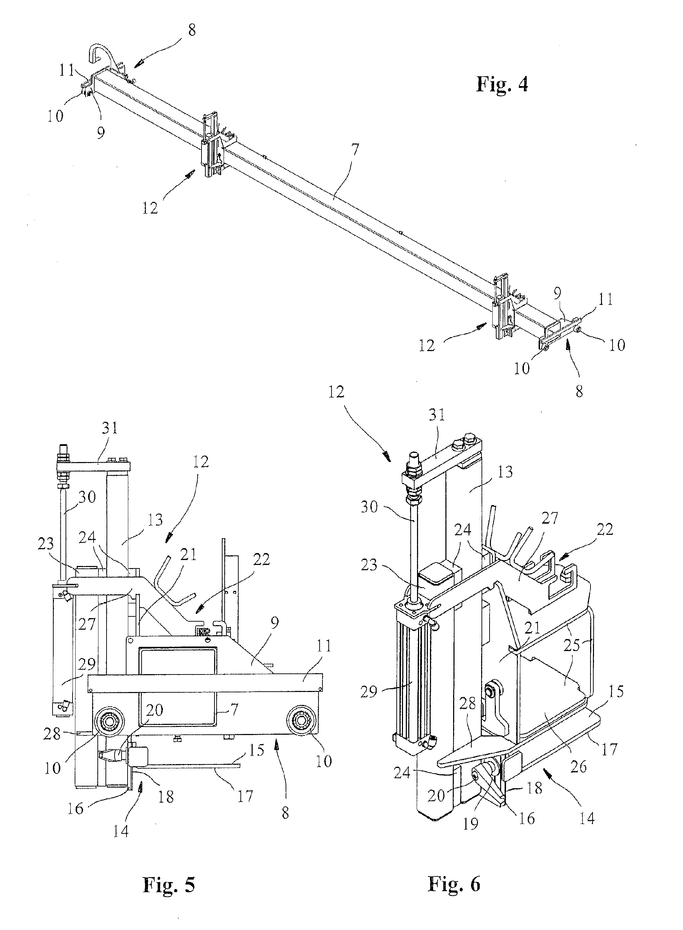

Die Platteneinzugsvorrichtung 1 enthält einen in Figur 4 und 5 dargestellten Träger 7, der bei der gezeigten Ausführung als horizontaler Querbalken ausgebildet und über zwei endseitige Führungselemente 8 auf zwei hier nicht dargstellten parallelen Führungsschienen verschiebbar geführt ist. Die beiden an den Enden des Trägers 7 befestigten Führungselemente 8 weisen jeweils zwei an einem Tragblech 9 angeordnete Führungsrollen 10 und eine oberhalb der Führungsrollen 10 angeordnete Leitschiene 11 auf. An dem hier aus einem Hohlprofilrohr mit quadratischem Querschnitt bestehenden Träger 7 sind zwei voneinander beabstandete und in Figur 6 separat dargestellte Entnahmeeinrichtungen 12 befestigt. Durch einen ebenfalls nicht dargestellten Antrieb ist der Träger 7 mit den daran befestigten Entnahmeeinrichtungen 12 gesteuert verschiebbar. Bei dem Antrieb kann es sich z.B. um einen Pneumatikantrieb, einen elektrischen Antrieb mit Antriebsmotor und Antriebskette oder um einen anderen geeigneten Antrieb handeln.

Wie besonders aus Figur 6 hervorgeht, weisen die Entnahmeeinrichtungen 12 einen in Vertikalrichtung verstellbaren Transportarm 13 auf, der an seiner Unterseite ein winkelförmiges Anlageelement 14 mit einem horizontalen Auflageteil 15 und einem vertikalen Anschlagteil 16 trägt. Das horizontale Auflageteil 15 enthält eine untere horizontale Auflagefläche 17 zur Auflage auf der Oberseite eines plattenförmigen Werkstücks 2, während das vertikale Anschlagteil 16 eine zur horizontalen Auflagefläche 17 quer verlaufende vordere Anlagefläche 18 zur Anlage an einer Seitenfläche des plattenförmigen Werkstücks 2 enthält. Das horizontale Auflageteil 15 ist über Langlöcher 19 und Stellschrauben 20 an dem vertikalen Anschlagteil 17 in Vertikalrichtung verstellbar angeordnet, so dass das winkelförmige Anlageelement 14 an unterschiedliche Dicken der plattenförmigen Werkstücke 2 angepasst werden kann.

Der Transportarm 13 ist zwischen einer vorderen Platte 21 einer Halterung 22 und einem von der Platte 21 beabstandeten Führungsstab 23 über hier als Gleitklötze ausgebildete Gleitführungen 24 vertikal verschiebbar geführt. Die Halterung 22 weist neben der vorderen Platte 21 eine aus Blechteilen 25 zusammengesetzte hintere Aufnahme mit einer an die Außenkontur des Trägers 7 angepassten quadratischen Öffnung 26 auf. Über Haltestege 27 und 28 ist der Führungsstab 23 mit der Halterung 22 verbunden. Zur vertikalen Verschiebung des Transportarms 13 ist an dem Führungsstab 23 ein hier als Pneumatikzylinder ausgebildeter Linearantrieb 29 angeordnet, dessen Kolbenstange 30 über ein Querstück 31 mit dem oberen Ende des vertikal verschiebbaren Transportarms 13 verbunden ist.

Im Folgenden wird die Funktionsweise der vorstehend beschriebenen Platteneinzugsvorrichtung anhand der Figuren 1 bis 3 erläutert.

Zunächst wird die Höhe des horizontalen Auflageteils 16 des Anlageelements 14 so eingestellt, dass der Abstand der unteren Auflagefläche 17 von der Unterkante des vertikalen Anschlagteils 16 etwas geringer als die kleinste Dicke der plattenförmigen Werkstücke 2 ist. Dadurch kann der automatische Einzug selbst bei Niveauunterschieden von einigen Zentimetern gewährleistet werden.

Zur Entnahme eines plattenförmigen Werkstücks 2 von einem auf dem Hubtisch 3 angeordneten Plattenstapel 4 wird der Träger 7 mit den daran befestigten Entnahmeeinrichtungen 12 zunächst an die in Figur 1 dargestellte Stelle oberhalb der hinteren Kante des plattenförmigen Werkstücks 2 verfahren. Der Hubtisch 3 wird gemäß Figur 2 soweit angehoben, dass das zu bearbeitende obere plattenförmige Werkstück 2 mit seiner Unterseite sicher oberhalb der Auflagefläche 6 des Maschinentisches 5 liegt. Dann wird der Transportarm 13 durch entsprechende Ansteuerung des Linearantriebs 29 soweit abgesenkt, dass das horizontale Auflageteil 15 auf der Oberseite des oberen plattenförmigen Werkstücks 2 aufliegt, wie dies in Figur 2 gezeigt ist. Dann kann der Träger 7 in Richtung des Pfeils 32 der Figuren 2 und 3 verschoben werden, wodurch das plattenförmige Werkstücks 2 durch die Anlage des vertikalen Anschlagteils 16 an der Seitenfläche des plattenförmige Werkstücks 2 auf die Auflagefläche 6 des Maschinentisches 5 geschoben wird. An dem Maschinentisch 5 kann ein entsprechender Anschlag 33 zur Anlage des plattenförmigen Werkstücks 2 vorgesehen sein.

## Patentansprüche

1. Platteneinzugsvorrichtung (1), die mindestens eine an einem verschiebbaren Träger (7) angeordnete Entnahmeeinrichtung (12) für die Entnahme eines plattenförmigen Werkstücks (2) von einem Plattenstapel (4) und die Verschiebung des plattenförmigen Werkstücks (2) auf einen Maschinentisch (5) enthält, **dadurch gekennzeichnet, dass** die Entnahmeeinrichtung (12) ein gegenüber dem Träger (7) vertikal bewegbares Anlageelement (14) mit einem Auflageteil (15) zur Auflage auf einer Oberseite des Werkstücks (2) und einem Anschlagteil (16) zur Anlage an einer Seitenfläche des Werkstücks (2) enthält.

2. Platteneinzugsvorrichtung nach Anspruch 1, **dadurch gekennzeichnet, dass** das Auflageelement (15) in der Höhe verstellbar an dem Anschlagteil (16) angeordnet ist.

3. Platteneinzugsvorrichtung nach Anspruch 2, **dadurch gekennzeichnet, dass** das Auflageelement (15) über Langlöcher (19) und Stellschrauben (20) verstellbar an dem Anschlagteil (16) angeordnet ist.

4. Platteneinzugsvorrichtung nach einem der Ansprüche 1 bis 3, **dadurch gekennzeichnet, dass** das Auflageteil (15) eine untere horizontale Auflagefläche (17) zur Auflage auf einer Oberseite des Werkstücks (2) und das Anschlagteil (16) eine vordere Anlagefläche (18) zur Anlage an einer Seitenfläche des Werkstücks (2) enthält.

5. Platteneinzugsvorrichtung nach einem der Ansprüche 1 bis 4, **dadurch gekennzeichnet, dass** das Anlageelement (14) an einem vertikal verstellbaren Transportarm (13) angeordnet ist.

6. Platteneinzugsvorrichtung nach Anspruch 5, **dadurch gekennzeichnet, dass** der Transportarm (13) zwischen einer vorderen Platte (21) einer Halterung (22) und einem von der Platte (21) beabstandeten Führungsstab (23) über Gleitführungen (24) oder eine Linearführung verschiebbar geführt ist.

7. Platteneinzugsvorrichtung nach Anspruch 6, **dadurch gekennzeichnet, dass** die Halterung (22) eine Aufnahme mit einer an die Außenkontur des Trägers (7) angepassten Öffnung (26) enthält.

8. Platteneinzugsvorrichtung nach Anspruch 6 oder 7, **dadurch gekennzeichnet, dass** der Führungsstab (23) über Haltestege (27, 28) mit der Halterung (22) verbunden ist.

9. Platteneinzugsvorrichtung nach einem der Ansprüche 5 bis 8 , **dadurch gekennzeichnet, dass** der Transportarm (13) über einen Linearantrieb (29) verschiebbar ist.
